Europäisches Patentamt

European Patent Office

Office européen des brevets

(19)

(11) EP 0 756 399 A2

(12) **DEMANDE DE BREVET EUROPEEN**

(43) Date de publication:
29.01.1997 Bulletin 1997/05

(51) Int Cl.6: **H04L 9/30**

(21) Numéro de dépôt: 96401446.8

(22) Date de dépôt: 01.07.1996

(84) Etats contractants désignés:
AT BE CH DE DK ES FI FR GB GR IE IT LI LU NL PT SE

(30) Priorité: 27.07.1995 FR 9509179

(71) Demandeur: CP8 TRANSAC
F-78430 Louveciennes (FR)

(72) Inventeur: **Patarin, Jacques**
78220 Viroflay (FR)

(74) Mandataire: **Corlu, Bernard Edouard et al**
**Direction de la Propriété Intellectuelle BULL SA,**
**Poste courrier: LV59C18,**
**68 route de Versailles**
**78430 Louveciennes (FR)**

(54) **Procédé de communication cryptographique**

(57) Un nouveau schéma de cryptographie asymétrique pouvant être utilisé en chiffrement, signature et authentification. Le schéma est basé sur des équations polynomiales publiques de petits degré à valeur dans un anneau fini K.

Le mécanisme n'est pas nécessairement bijectif La clé secrète permet de cacher des équations polynomiales à valeur dans des extensions de l'anneau K. La résolution de ces équations permet, si l'on dispose de la clé secrète, de réaliser des opérations qui ne sont pas réalisables uniquement à partir de la clé publique.

**Fig. 1**

## Description

L'invention concerne un procédé de communication cryptographique asymétrique pour traiter des messages et sécuriser des communications entre des interlocuteurs. Il peut être utilisé pour chiffrer des messages de façon asymétrique, ou pour les signer de façon asymétrique également. Il peut aussi être utilisé en authentification asymétrique.

Une première solution bien connue a été élaborée en 1977. Cette solution a fait l'objet du brevet US 4,405,829 déposé par les inventeurs Rivest, Shamir et Adleman le 14 Décembre 1977. Cette solution, communément appelée RSA du nom des inventeurs, fait intervenir deux types de clés. La première clé (Kp) permet le chiffrement des messages et la seconde (Ks), le déchiffrement. Ce procédé, mondialement connu, est à la base de la cryptographie asymétrique, appelée ainsi parce que les clés de chiffrement et de déchiffrement sont différentes. Dans un même réseau, chaque membre (i) possède un couple de clés. La première $(Kp_i)$ est publique et peut donc être connue de tous ; la seconde $(Ks_i)$ est secrète et ne doit jamais être communiquée.

Une communication chiffrée entre deux interlocuteurs (1) et (2) d'un même réseau s'effectue de la façon suivante : dans un premier temps, (1) et (2) se communiquent leurs clés publiques $(Kp_1)$ et $(Kp_2)$ puis, lorsque (1) veut envoyer un message (M) à (2) il chiffre ce message avec la clé $(Kp_2)$, ce message une fois reçu par (2) ne peut être déchiffré qu'à l'aide de la clé secrète $(Ks_2)$ détenue par (2) :

$$\text{Chiffrement : } M' = RSA\ (M, Kp_2)$$

$$\text{Déchiffrement : } M = RSA\ (M', Ks_2)$$

Lorsque (2) veut envoyer un message à (1), il chiffre avec la clé publique de (1) : $(Kp_1)$, ce dernier déchiffre avec sa propre clé secrète $(Ks_1)$.

Le procédé RSA peut également être utilisé en signature : le message est alors chiffré avec la clé secrète propre à un individu, le message chiffré appelé signature est alors transmis avec le message en clair, le récepteur du message demande à une autorité la clé publique de l'individu et se sert de celle-ci pour déchiffrer la signature, si le texte déchiffré correspond au message en clair, la signature est authentique.

Ce procédé de communication cryptographique présente quelques inconvénients. Ainsi, les nombres à manipuler sont-ils assez grands (typiquement 512 bits actuellement), ce qui oblige à faire beaucoup de calculs et mène à des signatures assez longues. De plus, la sécurité du RSA serait compromise si de nouveaux progrès en factorisation étaient obtenus.

D'autres procédés de communication cryptographiques asymétriques ont été suggérés pour réaliser les fonctions de chiffrement ou de signature asymétrique de message, comme ceux utilisant des algorithmes à base de "sac-à dos", ou l'algorithme de MATSUMOTO-IMAI. Cependant, ces deux exemples se sont révélés avoir un degré de sécurité tout à fait insuffisant.

La présente invention propose une solution qui ne comporte pas les inconvénients de ces deux exemples tout en gardant un certain nombre de leurs avantages. La présente invention utilise un nouvel algorithme appelé " Algorithme des Corps Cachés" ou HFE (Hidden Field Equations) qui, comme le RSA, peut être utilisé pour les fonctions d'authentification, de chiffrement et de signature. De plus, alors que le RSA est principalement basé sur le problème de factorisation de grands nombres, l'algorithme HFE est basé sur un problème totalement différent : la résolution d'équations multivariables de petit degré (typiquement de degré 2 ou 3). Il faut noter que l'algorithme de MATSUMOTO-IMAI avait aussi cette propriété, mais, comme nous l'avons déjà signalé, il s'est révélé avoir un degré de sécurité tout à fait insuffisant, ce qui le rend impropre à une utilisation dans un procédé de communication cryptographique. L'auteur de la présente invention est d'ailleurs la personne qui a découvert que l'algorithme de MATSUMOTO-IMAI n'était pas cryptographiquement solide.

Parmi les éléments nouveaux qui peuvent contribuer à la solidité de l'algorithme HFE, il y a le fait que cet algorithme n'est pas nécessairement bijectif, et le fait qu'il puisse utiliser des équations polynomiales très générales.

Un autre avantage qui ressort de l'invention est la possibilité pour l'algorithme HFE de pouvoir calculer des signatures ultracourtes (de moins de 200 bits), alors que les signatures asymétriques les plus courtes connues actuellement sont de l'ordre de 220 ou 320 bits (obtenues à l'aide de l'algorithme de SCHNORR ou de l'algorithme DSS. Ces algorithmes ne peuvent être utilisés qu'en signature ou authentification mais pas en chiffrement/déchiffrement). Il est préférable d'utiliser au moins 512 bits si l'on utilise le RSA.

<u>Définitions :</u>

1. On appellera "extension " de degré n d'un anneau A toute structure algébrique isomorphe à A[X]/g(X) où A[X] est l'anneau des polynômes à une indéterminée sur A, et où g(X) est un polynôme de degré n.

Un cas particulièrement important est celui où A est un corps fini $F_q$ et g un polynôme irréductible de degré n sur $F_q$. Alors A[X]/g(X) est un corps fini isomorphe à $F_q$n.

2. On appellera "base" d'une extension $L_n$ de degré n de A, une famille de n éléments de $L_n$, ($e_1$, $e_2$, ....., $e_n$), telle que tout élément e de $L_n$ s'exprime de façon unique sous la forme

$$e=\sum_{i=1}^{n} \alpha_i e_i \quad \text{avec } \alpha_i \in A.$$

L'invention concerne à cet effet un procédé de communication cryptographique transformant une valeur (X) représentée par (n) éléments d'un anneau fini (K) en une valeur image (Y) représentée par (n') éléments de l'anneau (K), caractérisé en ce que :

a) chaque élément (n') de la valeur image (Y) a la forme d'une équation polynômiale publique ayant un petit degré (D) supérieur ou égal à 2 (*typiquement D=2 ou 3*) en les éléments (n) de la valeur (X) ;

b) la valeur image (Y) peut également être obtenue à partir de la valeur (X) par une transformation comprenant les étapes suivantes, dont certaines au moins nécessitent la connaissance d'un secret cryptographique :

b1) appliquer à la valeur (X) une première transformation polynômiale secrète (s) présentant un degré 1 en les (n) éléments de la valeur (X) pour obtenir une première image (I1) à (n) éléments ;

b2) former une ou plusieurs branches, chaque branche étant constituée d'éléments de la première image (I1) (*par exemple la première branche comprend les $n_1$ premiers éléments de I1, la seconde branche comprend les $n_2$ suivants, etc..., ou bien un même élément pourra aussi être présent dans plusieurs branches*) et,

- dans au moins l'une (e) des branches (*éventuellement toutes*), les ($n_e$) éléments de la branche sont considérés comme représentant une variable ou un petit nombre (k) de variables (x, x', x'', ....,$x^k$) appartenant à une extension ($L_W$) de degré W de l'anneau (K) avec W$*$k=$n_e$, et appliquer à au moins cette branche (e) une transformation définie comme suit :

$$f_e : L_W^k \rightarrow L_W^k$$

$$(x, x', x'',....,x^k) \mapsto (y, y',y'',....., y^k)$$

en notant (y, y', y'',....., $y^k$) l'image de (x, x',x'',...., $x^k$) par la transformation $f_e$, $f_e$ vérifiant les deux propriétés suivantes :

- b2.1) dans une base (B) de l'extension d'anneau ($L_W$), chaque composante de l'image (y, y', y'',....., $y^k$) est exprimée sous la forme d'un polynôme en les composantes de (x, x',x'',...., $x^k$) dans cette base, ce polynôme ayant un degré total au plus égal audit degré (D) de l'équation polynômiale publique ;
- b2.2) exprimée dans l'extension d'anneau ($L_W$), la transformation ($f_e$) est telle qu'il est possible (*sauf éventuellement pour certaines entrées dont le nombre est négligeable devant le nombre total d'entrées*) de calculer des antécédents de ($f_e$) lorsqu'ils existent (*ce calcul s'effectue, soit par recherche exhaustive lorsque $n_e$ est très petit, soit en utilisant un algorithme mathématique de résolution de ce type d'équations polynômiales dans les anneaux finis*);

- et à appliquer aux éventuelles autres branches des transformations polynômiales de degré au plus égal audit degré (D) en les composantes à valeur dans l'anneau (K) ;

b3) en sortie de la branche ainsi transformée ou des autres branches, on ajoute un polynôme (secret ou public) de degré au plus (D) ne dépendant que des variables des branches situées immédiatement avant cette branche (cette étape n'est pas obligatoire : on peut ajouter le polynôme nul).

b4) la branche ainsi transformée, ou la pluralité de branches ainsi transformées puis concaténées (*c'est-à-dire regroupées*), constituant une seconde image (I2) ;

b5) appliquer à la seconde image (I2) une seconde transformation polynômiale (t) secrète, présentant un degré 1 en les éléments de la seconde image (I2) pour obtenir une troisième image (I3) présentant un nombre déterminé d'éléments ; et

b6) sélectionner (n') éléments parmi l'ensemble des éléments de la troisième image (I3) pour former ladite valeur image (Y) *(par exemple les I premiers ; ou bien, pour certaines variantes, on prend tous les éléments de I3, auquel cas Y=I3).*

L'invention concerne aussi un procédé de signature asymétrique, et un procédé d'authentification asymétrique, qui utilisent le procédé de communication ci-dessus.

D'autres détails et avantages de l'invention au cours de la description suivante de quelques formes de réalisation préférées mais non limitatives, en regard des dessins annexés, sur lesquels :

La figure 1 présente l'enchaînement des transformations utilisées pour traiter un message;

La figure 2 présente un dispositif de communication utilisé pour effectuer un chiffrement/déchiffrement de message ;et

La figure 3 présente ce même dispositif, utilisé pour effectuer une signature de message et sa vérification.

Avant de présenter l'invention, on effectuera tout d'abord un bref rappel mathématique, concernant notamment les propriétés des corps finis.

Description et propriétés des corps finis.

1) Fonction f :

Soit K, un corps fini de cardinal q de caractéristique p ( typiquement, mais ce n'est pas une obligation, q = p = 2). Soit $L_N$ une extension de degré N de K, soient $\beta_{i,j}$, $\alpha_i$ et $\mu_0$ des éléments de $L_n$, soient $\theta_{i,j}$, $\varphi_{i,j}$ et, $\xi_i$ des entiers, soit f l'application suivante :

$$f: L_N \rightarrow L_N$$

$$x \longmapsto \Sigma_{i,j} \beta_{i,j} * x^{Q+P} + \Sigma_i \alpha_i * x^S + \mu_0$$

où $Q = q^{\theta i,j}$, $P = q^{\varphi i,j}$ et $S = q^{\xi i}$

où f est un polynôme en x et(*) est la fonction de multiplication. On notera que Q, P, et S désignent donc éventuellement plusieurs valeurs dans cette écriture, car il peut y avoir plusieurs $\theta_{i,j}$, $\varphi_{i,j}$ et, $\xi_i$.

De plus, pour tout entier $\lambda$,

$$x \longmapsto x^{q^\lambda}$$

est une application linéaire de $L_N \rightarrow L_N$ Donc f est une fonction quadratique.

Soit B une base de $L_N$ alors, l'expression de f dans la base B est :

$$f(x_1,....., x_N)= (P_1(x_1,....., x_N), ... ,P_N(x_1,....., x_N))$$

où $P_1, ... , P_N$ sont des polynômes de degré total 2 en N variables $x_1,....., x_N$.

Les polynômes $P_1, ... , P_N$ sont calculés en utilisant une représentation de $L_N$. Une représentation de $L_N$ est typiquement la donnée d'un polynôme irréductible $i_N(X)$ sur K, de degré N, ce qui permet d'identifier $L_N$ à $K[X]/(i_N(X))$. Il est alors facile de calculer les polynômes $P_1, ... , P_N$.

2) Inversion de f.

Notons $\mu$ le degré en x du polynôme f. f n'est pas obligatoirement une bijection de $L_N \rightarrow L_N$ ; cependant :

1) "a" étant un élément de $L_N$, on connaît des algorithmes qui permettent relativement facilement de trouver toutes les valeurs de x de $L_N$ (si elles existent) telles que f(x) = a , lorsque $\mu$ n'est pas trop grand (par exemple pour $\mu \leq 1000$)

2) De plus, pour tout "a" de $L_N$, on a au plus "$\mu$" solutions en x de f(x) = a.

3) Dans certains cas, f peut être bijective.

Algorithme HFE de base pour le système de chiffrement/déchiffrement.

Nous allons maitenant décrire une première version du nouvel algorithme HFE. Cette version n'est pas limitative, des versions plus générales sont présentées dans les chapitres suivants.

Un corps K, comprenant q = $p_m$ éléments, est public. Chaque message est composé de n éléments de K. Par exemple, si p = 2, chaque message possède n∗m bits. n est également public. n est séparé en d entiers : $n = n_1 + ... + n_d$

Pour chacun de ces entiers $n_e$ (1 <= e <= d), on associe une extension $Ln_e$ du corps K de degré $n_e$ (le symbole <= signifie "inférieur ou égal".

Appelons "mot" une valeur représentée par des composantes de K. Par exemple, un élément de $Ln_e$, (1 < =e <= d) peut être représenté comme un mot de longueur $n_e$. Dans le mécanisme de chiffrement que nous allons décrire, nous allons utiliser des fonctions quadratiques $f_1$, ... , $f_d$ analogues à la fonction f décrite précédemment, en prenant : $N = n_1$ pour $f_1$, $N = n_2$ pour $f_2$, ...etc. Ces fonctions généreront d mots. Ces d mots seront alors recombinés en un mot de longueur n.

- Les objets secrets sont :

1) deux transformations affines bijectives s et t de $K^n \rightarrow K^n$. Ces bijections affines peuvent être représentées dans une base par des polynômes de degré égal à 1 et à coefficients dans K.

2) la séparation de n en d entiers : $n = n_1 + ... + n_d$.

3) La représentation des corps $Ln_1$, ....., $Ln_d$. Ces "représentations" sont données par le choix de d polynômes irréductibles. Nous noterons $\Psi n_e$ l'isomorphisme de $K^n e$ vers $Ln_e$ donné par cette représentation, avec e tel que 1 <= e <= d.

4) Les fonctions $f_1$, ... , $f_d$ quadratiques, du même type que la fonction f donnée au paragraphe intitulé "fonction f" ( en utilisant $N = n_e$, et 1 <= e <= d).

Première remarque : tous ces objets sont a priori secrets, mais en fait les objets des points 2), 3), et 4) ci-dessus peuvent a priori être également publics. La sécurité de l'algorithme réside en effet principalement sur les transformations secrètes s et t.

Seconde remarque : s et t sont des applications bijectives, mais elles peuvent être aussi "quasi bijectives", c'est-à-dire que ce serait des applications qui n'ont au plus que peu d'antécédents.

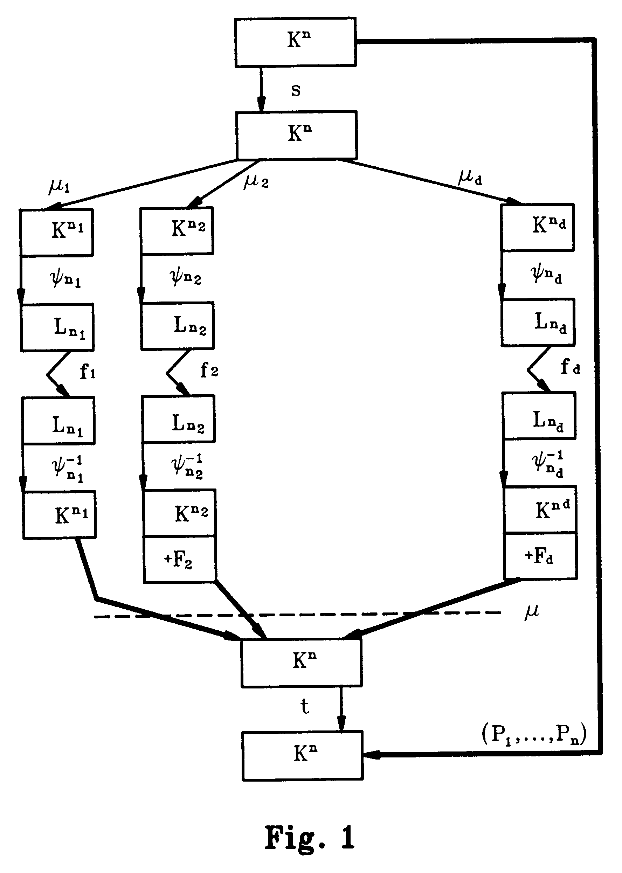

Le mécanisme de chiffrement est décrit sur la figure 1. La séquence d'opérations se déroule en commençant par le haut et en se dirigeant vers le bas. Intervient tout d'abord la transformation affine bijective s de $K^n \rightarrow K^n$.

Les fonctions $\mu_1$, ..., $\mu_d$ sont des fonctions projections de $K^n \rightarrow K^{ne}$ (où 1 <= e <= d), et $\mu$ est la fonction de concaténation inverse. Les fonctions $\mu_1$, ..., $\mu_d$ séparent en quelque sorte les n éléments en d "branches".

L'isomorphisme $\Psi_{n_e}$ s'applique depuis les différents corps $K^{ne}$ vers les différentes représentations de corps $Ln_1$, ....., $Ln_d$, puis les fonctions quadratiques $f_1$, ...., $f_d$ s'appliquent respectivement de $Ln_1$, ....., $Ln_d$ dans $Ln_1$, ....., $Ln_d$. Ensuite, l'isomorphisme inverse $(\Psi_{n_e})$-1 s'applique depuis les différentes représentations de corps $Ln_1$, ....., $Ln_d$ vers les différents corps $K^{ne}$.

Puis la fonction de concaténation inverse $\mu$ s'applique de $K^{ne}$ vers $K^n$. Enfin, intervient la transformation affine bijective t de $K^n \rightarrow K^n$, de forme générale semblable à la transformation s.

$F_2$ est une fonction de degré au plus (D) dépendant des variables du bloc le plus à gauche. Plus généralement, $F_i$ ( 2 <= i <= d ) est une fonction de degré au plus (D) dépendant des variables des blocs 1,2, ....i-1.

REMARQUE : Ces fonctions $F_2$, ... , $F_d$ réalisent un schéma de Feistel par blocs. Souvent on ne les fait pas intervenir dans l'algorithme HFE, c'est-à-dire : $F_2 = ... = F_d = 0$.

Il faut remarquer, et ceci est un point important, que la composition de toutes ces opérations génère une fonction quadratique lorsqu'on exprime cette fonction au moyen de ses composantes dans une base. Donc, cette fonction peut être donnée par n polynômes ($P_1$, ......., $P_n$) à coefficients dans K, ces polynômes permettant de calculer le texte chiffré (y) en fonction du texte clair x.

- Les objets publics sont :

1) Le corps K de q = $p^m$ éléments, et la longueur n des messages.

2) Les n polynômes ($P_1$, ...., $P_n$) en n variables de K. Ainsi toute personne peut chiffrer un message (l'algorithme de chiffrement est donc bien public, conformément aux caractéristiques de l'invention revendiquée).

De plus, le déchiffrement est possible si les objets secrets sont connus. En effet, il est alors possible d'inverser toutes les opérations décrites dans la figure 1. Ainsi, l'inversion des fonctions $f_e$ consiste alors en la résolution d'une équation polynomiale à une inconnue dans le corps $Ln_e$, comme ceci est indiqué pour f dans le paragraphe intitulé "inversion de f" ci-dessus. Il faut noter cependant que $f_e$ n'est pas obligatoirement bijective. Il est donc possible d'obtenir plusieurs antécédents. Le choix du texte clair sera alors déterminé à l'aide d'une redondance introduite dans le texte clair, le texte déchiffré étant celui qui possèdera cette redondance. Si les fonctions ne sont pas bijectives, il faudra songer à introduire cette redondance systématiquement dans le message en clair.

Exemple d'utilisation de l'algorithme en signature.

Deux cas sont à envisager :

- Les fonctions sont bijectives.

    Si H est le résultat de la fonction de "hachage" (de l'anglais "hash") appliquée à un message à signer (H possède par exemple un format de 128 bits), alors la signature S est $S = HFE^{-1}$ (H).

    Ainsi, par le fait que la fonction de chiffrement HFE est publique, n'importe qui peut vérifier la signature en réalisant : H' = HFE (S) et en vérifiant que H'=H. L'émetteur de la signature doit bien évidemment posséder le secret pour calculer S.

- Les fonctions ne sont pas bijectives.

    Dans ce cas, on peut choisir par exemple un nombre de bits en entrée de HFE supérieur au nombre de bits de la sortie, pour être à peu près sûr de pouvoir calculer des antécédents par l'algorithme HFE.

    Par exemple, H pourrait s'exprimer sur 128 bits et S sur 128+20 = 148 bits.

Cas particuliers d'implémentation.

Plusieurs façons de réaliser l'algorithme HFE offrent des avantages importants quant à sa réalisation pratique et son implémentation.

- Cas de l'algorithme à branche unique (c'est à dire : avec d=1).

    Cette version ne possède qu'une seule (grande) branche et donc, dans chaque équation, toutes les variables -c'est à dire tous les bits du message- interviennent. Compte tenu de la grande taille de cette branche, cette forme de réalisation ne présente pas les éventuelles faiblesses des branches de petite taille.

- Cas des petites branches avec la même fonction f.

    Ce cas particulier fait intervenir des petites branches, par exemple avec des valeurs de 12 bits, et la même fonction f. Cette version est particulièrement intéressante car elle pourrait être facilement implémentée dans des petites unités de traitement contenues, par exemple, dans des cartes à puce, l'implémentation est possible à l'aide d'un programme ou d'un co-processeur mathématique.

Première variante de l'algorithme HFE

La fonction f utilisée sur chaque branche telle qu'elle a déjà été décrite dans ce document est une équation polynomiale à une seule variable x dans un corps fini. Exprimée dans une base, cette fonction f s'exprime comme une équation de degré total égal à deux.

En fait, un autre type de fonction f peut être utilisé qui s'écarte légèrement du modèle général préalablement défini. Ce nouveau type consiste à choisir pour f une fonction dépendante de plusieurs variables de corps fini, par exemple deux variables $x_1$ et $x_2$, de telle sorte que, dans une base, l'expression en fonction de coordonnées reste de degré total égal à deux et que l'on puisse toujours recalculer les antécédents d'une valeur donnée de f lorsqu'ils existent.

Cette variante sera mieux comprise par l'exemple numérique ci-après. Considérons une branche de l'algorithme avec des valeurs de 64 bits et avec p=2. Selon la variante, prenons f dépendant de deux variables x et x' de 32 bits chacune, avec f(x, x') = ( y, y') tels que :

$$\begin{cases} y = x^4 + x * x' + x' & (1) \\ \\ y' = x^{17} + x^4 * x' + x'^3 & (2) \end{cases}$$

(à noter qu'on ne recommande pas particulièrement d'utiliser cette fonction précise, laquelle est donnée seulement à titre d'exemple).

Pour déterminer le couple (x, x') à partir de ( y , y'), il est possible de procéder par exemple de cette façon :

de l'équation (1), on extrait :

$$x' = (y - x^4) / (x + 1) \qquad (3)$$

D'où de l'équation (2), on extrait :

$$y'(x + 1)^3 = x^{17}(x + 1)^3 + x^4(y - x^4)(x + 1)^2 + (y - x^4)^3 \qquad (4)$$

Or, (4) est une équation polynomiale à une seule variable x. Comme nous l'avons déja signalé, les mathématiciens connaissent déja des méthodes générales pour résoudre ce type d'équations, on peut donc résoudre (4) ce qui permet de définir les valeurs de x qui résolvent l'équation puis, en remplaçant x par ces valeurs dans l'équation (3) , on en déduit la valeur de x'.

REMARQUE : Les techniques de résolution connues actuellement pour les équations à plusieurs variables dans les corps finis permettent de résoudre bien d'autres types d'équations que celle illustrée par cet exemple. En particulier, des équations où l'on a pas forcément à exprimer une variable en fonction des autres et à la remplacer.

## Seconde variante de l'algorithme HFE

Naturellement, la description de l'algorithme HFE et ses variantes ne limite pas l'invention revendiquée à l'utilisation d'équations polynomiales à un seul degré : le degré 2. Il est parfaitement envisageable d'utiliser le degré 3 : on a alors une forme publique de degré 3.

De même, le degré 4 ou même 5 est envisageable. Cependant, il faut que le degré reste assez petit pour que les équations publiques qui en résultent restent facilement mémorisables et calculables par un ordinateur.

Le choix des paramètres est également important pour assurer un maximum de sécurité et déjouer, autant que possible, les attaques en cryptanalyse. Ainsi, pour des raisons de sécurité, il est préférable que :

1) sur chaque branche, il existe au moins une variable de 32 bits et, de préférence, au moins de 64 bits,

2) il n'existe pas d'équations de la forme : $\Sigma \gamma_{ij} x_i y_j + \Sigma \alpha_i x_i + \Sigma \beta_j y_j + \delta_0 = 0$ avec au moins un des coefficients $\gamma_{ij}$, $\alpha_i$, $\beta_j$ ou $\delta_0$ non nuls et, qui soient toujours vérifiées si les $y_j$ sont les composantes du texte chiffré et les $x_i$ les composantes du texte en clair. REMARQUE : c'est entre autre parce ce qu'une telle condition n'était pas vérifiée que l'algorithme de Matsumoto-Imai déja cité s'est révélé totalement non sécuritaire.

3) il n'existe pas d'équation de la forme :

$$\Sigma \gamma_{ijk} x_i y_j y_k + \Sigma \alpha_{ij} x_i y_j + \Sigma \beta_{ij} y_j y_k + \Sigma \mu_i x_i + \Sigma \nu_i y_i + \delta_0 = 0$$

c'est-à-dire de degré total 3, et de degré 1 en x, .

4) plus généralement, pour la sécurité, il est préférable qu'il n'existe pas d'équation de "petit" degré, qui soit toujours vérifiée entre les coordonnées des messages clairs et chiffrés, mis à part les combinaisons linéaires des produits des équations publiques par de petits polynômes.

## Troisième variante de l'algorithme HFE

Lorsque la fonction n'est pas bijective, pour utiliser l'algorithme HFE, on a signalé qu'il est alors possible d'introduire de la redondance dans le texte en clair.

Il existe une autre possibilité : on peut en effet avoir une taille de la valeur chiffrée Y supérieure à la taille de la valeur en clair X si l'on introduit de nouveaux éléments de K dans la valeur chiffrée. Ces nouveaux éléments étant eux aussi donnés par des équations de degré deux en les composantes de X. Plus généralement, en reprenant les notations de la figure 1, un même élément de s(x) pourra être transmis dans plusieurs branches. Et on peut aussi ajouter une ou plusieurs branches constituées d'équations arbitraires de degré deux dans une base, ces branches supplémentaires serviront alors à distinguer le bon antécédent des autres.

### Quatrième variante de l'algorithme HFE

Au lieu de rendre publiques toutes les équations donnant la fonction finale de la figure 1, on peut en garder une ou plusieurs secrètes. C'est à dire, qu'au lieu de rendre $(P_1, ....., P_n)$ publiques, on peut ne rendre publique qu'une partie de ces équations, le chiffrement s'effectue alors en calculant seulement les $(P_1, ....., P_n)$ publics.

Pour le déchiffrement, on essaie toutes les valeurs possibles pour les $P_i$ non publics, ce qui donne à priori plusieurs messages déchiffrés possibles, le bon message est repéré comme auparavant : soit grace à l'introduction de redondance dans le message en clair, soit grace à la méthode indiquée dans la troisième variante.

REMARQUE : le fait d'enlever ainsi une ou plusieurs équations publiques peut rendre dans certains cas encore plus difficile la découverte de la structure de corps cachés par l'algorithme HFE.

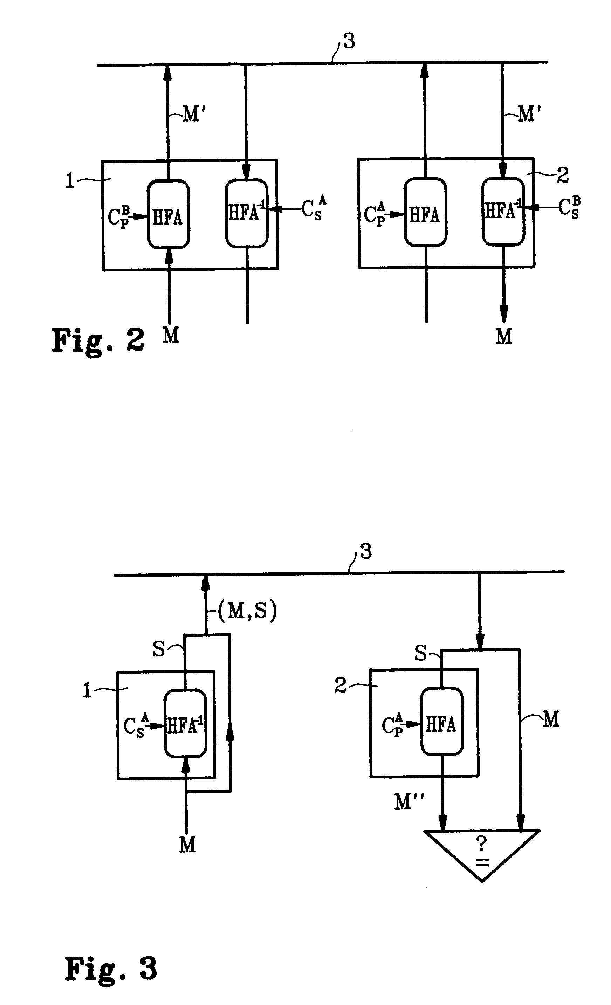

### Explication de la figure 2

La figure 2 illustre de façon schématique un exemple du système de chiffrement / déchiffrement utilisant l'algorithme cryptographique décrit ci-dessus.

Soient deux individus A et B appartenant à un même réseau de communication, chacun possédant un dispositif respectif 1,2 d'émission/réception de messages. Ce dispositif inclut des moyens de calcul, par exemple un ordinateur, agencés pour effectuer un chiffrement / déchiffrement des messages, et des moyens de mémorisation. Au moins une partie de ces moyens de calcul ou de mémorisation peut se trouver dans un objet portatif incorporant un microprocesseur ou des circuits logiques microcablés définissant des zones dont l'accès est contrôlé et peuvent donc renfermer des informations secrètes telles que des clés cryptographiques (voir par exemple l'objet portatif décrit dans le brevet français N°2.401.459).

Chaque dispositif incorpore l'algorithme HFE tel que décrit précédemment, notamment sous la forme d'un programme, ainsi que l'algorithme inverse HFE$^{-1}$.

Les deux dispositifs sont reliés entre eux au moyen d'une ligne de communication 3.

Les deux individus A et B possèdent respectivement un couple de clés : une clé publique Cp$^A$ et Cp$^B$ et une clé secrète Cs$^A$ et Cs$^B$ corrélée à la clé publique correspondante Cp$^A$ ou Cp$^B$. Si A et B n'ont pas les moyens de calculer les couples de clé, le réseau a très bien pu le faire, ce qui lui confère alors une certaine autorité envers chaque membre du réseau. Si ces deux individus veulent dialoguer ensemble de façon sécurisée, c'est à dire sans que personne ne puisse comprendre les données échangées, ils vont alors réaliser la procédure suivante :

L'individu A envoie à B sa clé publique Cp$^A$ et, B envoie à A sa clé publique Cp$^B$. Selon une variante, le réseau peut garder en mémoire centrale les clés publiques de tous ces membres et les communiquer à la demande de ceux-ci. Une fois que A a reçu la clé publique Cp$^B$, A va l'utiliser pour chiffrer, à l'aide de l'algorithme cryptographique HFE, un message M qu'il désire envoyer à B, en un message M'. Ce message, une fois reçu par B, est déchiffré à l'aide de l'algorithme cryptographique HFE$^{-1}$ et de la clé secrète Cs$^B$. Seul B peut déchiffrer le message, car il est le seul membre du réseau à posséder cette clé. Pour la transmission des messages de B vers A, la procédure est absolument analogue.

### Explication de la figure 3

La figure 3 illustre de façon schématique un exemple d'utilisation du système de la figure 2 pour la mise en oeuvre d'une procédure de calcul et de vérification de signature qui utilise l'algorithme cryptographique décrit précédemment.

On impose ici que la transmission de messages s'effectue avec authentification, c'est à dire que le récepteur du message M puisse être sûr que le message provient d'une certaine personne. Par exemple, supposons que A veut communiquer à B un message authentifié. Les deux interlocuteurs vont réaliser la procédure suivante :

L'individu A va tout d'abord envoyer à B sa clé publique Cp$^A$ ou, en variante, B peut aussi demander au réseau cette clé. Puis, A va chiffrer le message avec sa propre clé secrète Cs$^A$ et l'algorithme cryptographique HFE$^{-1}$. Le résultat obtenu est appelé la signature S du message. Puis, le message (qui transite donc en clair) et sa signature sont envoyés à B. Ce dernier déchiffre la signature à l'aide de l'algorithme cryptographique HFE et de la clé publique Cp$^A$, qu'il a précédemment reçue. Le résultat obtenu, noté M'', doit être égal au message reçu M. Si tel est bien le cas, cela prouve que la signature a bien été calculée à l'aide de la clé secrète Cs$^A$ et donc que le message provient bien de A, seul membre à posséder cette clé dans le réseau.

Un perfectionnement connu en soi de ce système consiste à calculer, non pas la signature du message, mais la signature d'un concentré du message. Ainsi, par une fonction de "hachage", un message relativement important peut être comprimé en une donnée H caractéristique du message. Cette fonction de "hachage" peut être réalisée en utilisant des fonctions de hachages classiques (comme MD5 ou SHA).

En résumé, l'invention résulte des découvertes suivantes :

1. L'inventeur a montré (cf document Crypto'95, pages 248 à 261) que l'algorithme initial de Matsumoto et Imai n'était pas cryptographiquement solide. Cet l'algorithme consistait à "cacher" une bijection f de la forme f(b)=a$^{1+Q}$ où Q=q$^\theta$ au moyen de deux transformations affines s et t.

2. L'inventeur a montré qu'il est possible de prendre pour f des fonctions beaucoup plus générales. En effet, l'inventeur a montré d'une part qu'il était possible d'utiliser des fonctions f non bijectives, d'autre part que l'on pouvait utiliser le fait que l'on sait calculer des antécédents pour des familles très diverses de polynômes, par exemple en utilisant des calculs de PGCD de polynômes, de résultants de polynômes, ou en utilisant des bases de GRÖBNER.

3. Il est nécessaire qu'au moins l'une des branches ne soit pas trop petite. En effet, l'inventeur a découvert que les petites branches mènent à des algorithmes HFE faibles.

4. De plus, l'inventeur a remarqué qu'il est parfois possible de ne sélectionner qu'une partie des éléments constituant la troisième image (I3) issue de la transformation de la seconde image (I2) par la seconde transformation polynômiale secrète.

**Revendications**

1. Procédé de communication cryptographique transformant une valeur (X) représentée par (n) éléments d'un anneau fini (K) en une valeur image (Y) représentée par (n') éléments de l'anneau (K), caractérisé en ce que :

   a) chaque élément (n') de la valeur image (Y) a la forme d'une équation polynômiale publique ayant un petit degré (D) supérieur ou égal à 2 en les éléments (n) de la valeur (X) ;
   b) la valeur image (Y) peut également être obtenue à partir de la valeur (X) par une transformation comprenant les étapes suivantes, dont certaines au moins nécessitent la connaissance d'un secret cryptographique :

   b1) appliquer à la valeur (X) une première transformation polynômiale secrète (s) présentant un degré 1 en les (n) éléments de la valeur (X) pour obtenir une première image (I1) à (n) éléments ;
   b2) les (n) éléments de la première image (I1) étant considérés comme représentant une variable ou un petit nombre (k) de variables (x, x', x",....,x$^k$) appartenant à une extension (L$_W$) de degré W de l'anneau (K) avec W∗k=n, appliquer à la première image (I1) une transformation définie comme suit :

$$f: L_W{}^k \rightarrow L_W{}^k$$

$$(x, x', x",....,x^k) \mapsto (y, y',y",.....,y^k)$$

   en notant (y, y', y",.....,y$^k$) l'image de (x, x', x",....,x$^k$) par la transformation f , sachant que f vérifie les deux propriétés suivantes :

   - b2.1) dans une base (B) de l'extension (L$_W$) de l'anneau, chaque composante de l'image (y, y', y",...., y$^k$) est exprimée sous la forme d'un polynôme en les composantes de (x, x',x",.....,x$^k$) dans cette base, ce polynôme ayant un degré total au plus égal audit degré (D) de l'équation polynômiale publique ;
   - b2.2) exprimée dans l'extension (L$_W$) de l'anneau, la transformation (f) est telle qu'il est possible de calculer des antécédents de (f) lorsqu'ils existent, sauf éventuellement pour certaines entrées dont le nombre est négligeable devant le nombre total d'entrées ;

   b3) la première image (I1) ainsi tranformée constitue une seconde image (I2) ;
   b4) appliquer à la seconde image (I2) une seconde transformation polynômiale (t) secrète, présentant un degré 1 en les éléments de la seconde image (I2) pour obtenir une troisième image (I3) présentant un nombre déterminé d'éléments ; et
   b5) sélectionner (n') éléments parmi l'ensemble des éléments de la troisième image (I3) pour former ladite valeur image (Y).

2. Procédé selon la revendication 1, dans lequel ledit petit degré (D) de l'équation polynômiale publique est égal à 2.

3. Procédé selon la revendication 1 , dans lequel le nombre k de variables est égal à 1.

4. Procédé selon la revendication 3, dans lequel ledit petit degré (D) de l'équation polynômiale publique est égal à 2, (K) est un corps fini, et ladite transformation (f) présente la forme suivante

$$f : L_W \to L_W$$

$$x \mapsto \Sigma_{i,j} \; \beta_{i,j} * x^{Q+P} + \Sigma_i \; \alpha_i * x^S + \mu_0$$

où : q est le cardinal du corps (K), $Q = q^{\theta i,j}$, $P = q^{\varphi i,j}$ et $S = q^{\xi i}$,

$\beta_{i,j}$, $\alpha_i$ et $\mu_0$ sont des éléments de $L_W$, et $\theta_{i,j}$, $\varphi_{i,j}$ et, $\xi_i$ sont des entiers, et où le degré en x du polynôme f est inférieur ou égal à 1000.

5. Procédé selon la revendication 1 , tel qu'il n'existe pas d'équations polynômiales de petit degré total en les composantes de $(x, x',x'',....,x^k)$ et $(y, y',y'',.....,y^k)$ autres que des combinaisons linéaires des produits des équations publiques par des petits polynômes.

6. Procédé selon la revendication 1, tel qu'il n'existe pas d'équations polynômiales de la forme : $\Sigma \; \gamma_{ij} \; x_i y_j + \Sigma \; \alpha_i x_i + \Sigma \; \beta_j y_j + \delta_0 = 0$, avec au moins un des coefficients $\gamma_{ij}$, $\alpha_i$, $\beta_j$ ou $\delta_0$ non nuls et qui soient toujours vérifiées si les $y_j$ sont les composantes du message chiffré, et les $x_i$ les composantes du message en clair.

7. Procédé selon la revendication 1, dans lequel l'anneau (K) est un corps fini et l'extension $(L_W)$ de l'anneau est une extension de degré W de l'anneau (K), c'est-à-dire que $(L_W)$ est isomorphe à $K[X]/g(X)$, où g est un polynôme irréductible de degré W sur K.

8. Procédé d'authentification asymétrique, par une première personne appelée vérifieur, d'une autre personne appelée prouveur, caractérisé en ce que :

-    le vérifieur envoie au prouveur une première valeur (Y) ;
-    le prouveur renvoie au vérifieur une seconde valeur (X) obtenue en appliquant à la première valeur (Y) une transformation correspondant à la transformation inverse de celle faisant l'objet du procédé de la revendication 1 ;
-    le vérifieur applique à la seconde valeur (X) la transformation de la revendication 1 et vérifie que le résultat obéit à une relation prédéterminée liée à la première valeur (Y).

9. Procédé de communication cryptographique transformant une valeur (X) représentée par (n) éléments d'un anneau fini (K) en une valeur image (Y) représentée par (n') éléments de l'anneau (K), caractérisé en ce que :

a) chaque élément (n') de la valeur image (Y) a la forme d'une équation polynômiale publique ayant un petit degré (D) supérieur ou égal à 2 en les éléments (n) de la valeur (X) ;
b) la valeur image (Y) peut également être obtenue à partir de la valeur (X) par une transformation comprenant les étapes suivantes, dont certaines au moins nécessitent la connaissance d'un secret cryptographique :

b1) appliquer à la valeur (X) une première transformation polynômiale secrète (s) présentant un degré 1 en les (n) éléments de la valeur (X) pour obtenir une première image (I1) à (n) éléments ;
b2) former une ou plusieurs branches, chaque branche étant constituée d'éléments de la première image (I1)et,

•    dans au moins l'une (e) des branches , les $(n_e)$ éléments de la branche sont considérés comme représentant une variable ou un petit nombre (k) de variables $(x, x', x'',....,x^k)$ appartenant à une extension $(L_W)$ de degré W de l'anneau (K) avec $W*k=n_e$, et appliquer à au moins cette branche (e) une transformation définie comme suit :

$$f_e : L_W{}^k \to L_W{}^k$$

$$(x, x', x'',....,x^{k)} \mapsto (y, y',y'',.....,y^k)$$

en notant (y, y', y",.....,$y^k$) l'image de (x, x', x",.....,$x^k$) par la transformation fe ,fe vérifiant les deux propriétés suivantes :

- b2.1) dans une base (B) de l'extension ($L_W$) de l'anneau, chaque composante de l'image (y, y', y",.....,$y^k$) est exprimée sous la forme d'un polynôme en les composantes de (x, x',x",.....,$x^k$) dans cette base, ce polynôme ayant un degré total au plus égal audit degré (D) de l'équation polynômiale publique ;
- b2.2) exprimée dans l'extension ($L_W$) de l'anneau, la transformation ($f_e$) est telle qu'il est possible de calculer des antécédents de ($f_e$) lorsqu'ils existent, sauf éventuellement pour certaines entrées dont le nombre est négligeable devant le nombre total d'entrées.

- et à appliquer aux éventuelles autres branches des transformations polynômiales de degré au plus égal audit degré (D) en les composantes à valeur dans l'anneau (K) ;

b3) la branche ainsi transformée, ou la pluralité de branches ainsi transformées puis concaténées, constituant une seconde image (I2) ;

b4) appliquer à la seconde image (I2) une seconde transformation polynômiale (t) secrète, présentant un degré 1 en les éléments de la seconde image (I2) pour obtenir une troisième image (I3) présentant un nombre déterminé d'éléments; et

b5) sélectionner (n') éléments parmi l'ensemble des éléments de la troisième image (I3) pour former ladite valeur image (Y).

10. Procédé selon la revendication 9, dans lequel, en sortie de la branche ainsi transformée ou des autres branches, on ajoute un polynôme de degré au plus (D) ne dépendant que des variables des branches situées immédiatement avant cette branche.

11. Procédé selon la revendication 9 , dans lequel la première image (I1) comporte plusieurs branches, l'une des branches manipulant des valeurs d'au moins 32 bits.

12. Procédé de signature asymétrique d'un message (X) et de vérification de cette signature, caractérisé en ce que la signature est obtenue en appliquant au message ou à une transformation publique du message une transformation correspondant à la transformation inverse de celle faisant l'objet du procédé de la revendication 1 ou 9, et en ce que la vérification consiste à contrôler que l'on obtient un résultat (Y) obéissant à des relations prédéterminées liées au message à signer.

**Fig. 1**

**Fig. 2**

**Fig. 3**